# EUROPEAN PATENT SPECIFICATION

(11) **EP 4 106 477 B1**
(45) Date of publication and mention of the grant of the patent: **18.10.2023**
(21) Application number: 21179260.1
(22) Date of filing: 14.06.2021
(51) Int. Cl.: H04W 76/10, H04W 48/18, H04W 84/00, H04W 84/04

(54) **METHOD OF A MOBILE RELAY SYSTEM, APPARATUS AND COMPUTER PROGRAM**
VERFAHREN FÜR EIN MOBILES RELAISSYSTEM, VORRICHTUNG UND COMPUTERPROGRAMM
PROCÉDÉ POUR UN SYSTÈME DE RELAIS MOBILE, APPAREIL ET PROGRAMME INFORMATIQUE

(43) Date of publication of application: 21.12.2022
(73) Proprietor: Seat, S.A., 08760 Martorell (ES); VOLKSWAGEN AG, 38440 Wolfsburg (DE)
(72) Inventor: MONTERO BAYO, Luca, 08028 Barcelona (ES); PFADLER, Andreas, 13357 Berlin (DE)
(74) Representative: 2SPL Patentanwälte PartG mbB

(56) References cited:
- EP-A1- 3 062 582
- US-A1- 2010 041 397
- US-A1- 2015 026 312
- US-A1- 2015 031 372

## Description

The present disclosure relates to the field of wireless communication. Embodiments relate to a method for a mobile relay system, a method for user equipment, a method for an application server, an apparatus, a vehicle and a computer program, more particularly, but not exclusively, to a concept for improving a user experience when using user equipment (UE) connected to a network entity via relay system (RS).

The development of the 5th-generation mobile communication standard (5G) of the 3rd-Generation Partnership Project (3GPP) has brought increased attention to the automotive industry, as vehicular communications are expected to leverage the most advanced features of the new generation of wireless communications. Among the main novelties of 5G, a wider range of usable spectrum (currently licensed up to the 28 GHz band - the first-ever Millimeter wave band for mobile use), enhanced support for high mobility scenarios and new mechanisms to guarantee and predict the experienced Quality of Service (QoS), have been established as key functions to support an increasingly connected transportation ecosystem. Besides, the latest standard release (Rel. 16) has given support to Vehicle-to-Everything (V2X) communications with New Radio (NR) technology, allegedly allowing vehicles to make use of the same spectrum options, even for Vehicle-to-Vehicle (V2V) use cases.

The use of higher frequency bands in communications implies propagating in a harsher channel, where the free-space path loss scales with the frequency squared (f²), and shading by obstacles and atmospheric effects (i.e., water vapor and oxygen absorption, or rain) take a non-negligible role.

Services relying on higher frequency systems, with their inherently high channel-induced attenuation, might find is challenging to deliver satisfactory QoS in some situations where signal power attenuation is increased, lowering the received Signal-to-Noise Ratio. This has sometimes motivated externalizing antennas for diverse services (such as 802.11p V2X, tolling, GPS and other services).

For the passengers of a vehicle using Internet services - including the driver, who might intensify their Internet use in an increasingly automatized mobility - the antennas equipped in their User Terminal (UT) (also referred as user equipment, UE) will still remain inside the vehicle, jeopardizing a stable mobile connection. As a result, some vehicles host a boosting system to wirelessly couple to the driver's UT, amplifying the signal through a wired set-up that leads to an external antenna.

It is thus worth considering that a vehicle may be equipped with a RS to manage a connection between a passenger's UE and a mobile base station. These RS may embed an internal antenna system (to communicate with passengers), an external antenna system (to communicate with infrastructure and mobile base stations), and the necessary equipment to successfully interpret the data packets sent to/from the passengers UTs for timely and reliable delivery.

WO 2020 / 071794 A1 shows an apparatus for relay aided beam management in a vehicle communication. The relay comprises an antenna system including an internal antenna located inside a vehicle and an external antenna located outside the vehicle. Further, the apparatus comprises a transceiver operably connected to the antenna system, wherein the transceiver is configured to receive, from a base station, a first signal via the external antenna of the antenna system. Further, the receiver can receive a vehicle speed, or a position of a window of the vehicle or windshield wiper. Further the apparatus comprises a processor configured to generate a second signal and, wherein the transceiver is further configured to transmit, to a user equipment, the second signal via the internal antenna.

WO 2010 / 112011 A1 shows a vehicle designed for car-to-car communication. The vehicle comprises a vehicle upper side, wherein the vehicle has an interior and an exterior region which are separated from one another at least partially by the vehicle upper side. Further, the vehicle comprises an exterior antenna, which is located on the vehicle upper side. The exterior antenna is found substantially in the exterior region, so that a transmission or reception operation takes place in the exterior region. Further, a signal conditioning unit is located beneath on the vehicle upper side in such a way that the signal conditioning unit is located in the interior of the vehicle.

DE 10 2014 221 956 A1 shows a device for a relay transceiver in a mobile communication system, which includes a base station transceiver and a packet data network interface. The network interface includes at least one transceiver module configured to communicate with at least one mobile transceiver and with the base station transceiver. The device further includes a control module configured to determine, on the basis of a data packet received by the at least one mobile transceiver, information about a quality criterion of a service associated with the data packet.

DE 10 2016 222 983 A1 shows a communication control device for a vehicle. The communication control device comprises a housing. Further, the communication control device comprises a port connected to the housing such that a mode in a region of the housing can be excited via the port. The communication control device further comprises a driver circuit configured to generate an electrical current to power the port to excite the mode.

US 2015/0026312 A1 discloses a method for network service provider selection for vehicle connected mobile devices. The method includes establishing data communication with a first network and a second network and determining if a mobile device is in communication with an in-vehicle multimedia module and one or more vehicle subsystems of a vehicle. Further, the method includes configuring the in-vehicle multimedia module to select the first network or the second network under pre-defined conditions; and establishing data communication between the mobile device and the selected network.

In the state of the art, if UE tries to connect to a base station via a RS there may be connection issues between different service provider of the UE and the RS. For example, a user enters a vehicle that comprises a RS. A network reception of a UE, e.g. a smartphone, of the user may be reduced due to the vehicle's structure. Thus, the UE may be connected to the vehicle's RS to improve the network reception of the UE. In doing so the UE may be connected to a network entity via the RS with the same mobile service provider (also referred as provider) as the UE. However, the connection to a base station of the same provider as the UE may not provide the best performance for the user (e.g. a QoS) which may result in a decreased user experience. For example, the performance may be better with a different base station from a different provider, resulting in an improved user experience. Hence, there may be a demand for an improved concept to enable a connection between UE and a network entity via an RS. This demand may be satisfied by the subject-matter of the appended independent and dependent claims.

The invention is set out by the appended set of claims, comprising a method according to claim 1, an apparatus according to claim 9 and a computer program according to claim 11.

It is therefore a finding that obtaining information about a service provider and choosing a network entity from a mobile communication system may improve a user experience, e.g. due to an improved QoS of the UE.

Examples provide a method for a mobile relay system. The method comprises obtaining information about a mobile service provider of user equipment. Further, the method comprises establishing a first connection between the user equipment and the relay system, wherein the relay system pretends to match the mobile service provider of the user equipment. The method also comprises choosing a network entity from a mobile communication system and establishing a second connection between the relay system and the network entity, to enable data transfer between the user equipment and the network entity. Thus, the UE may be connected to a network entity with a desired parameter, e.g. a QoS, a signal strength etc.

In an example, the choosing of the network entity may depend on a mobile service provider and/or a radio access technology (RAT) of the network entity. Thus, the UE can be connected to a preferred service provider and/or RAT.

In an example, the mobile service provider of the network entity may be different from the mobile service provider of the user equipment. This allows the RS to establish a connection to a network entity with a different service provider as the UE, which may result in an increased user experience, e.g. the user experience may be improved by an improved QoS.

In an example, the choosing of the network entity may depend on a predictive quality of service of the network entity. Thus, the RS may choose a network entity, which may provide a satisfactory QoS (the best QoS available for the mobile communication network) for the UE.

In an example, a first frequency used for the first connection is different from a second frequency used for the second connection. This allows the RS to use a frequency for establishing a connection with the network entity independently from a frequency used by the UE.

In an example, the method may further comprise transmitting information about the mobile service provider of the network entity to the user equipment. This allows the RS to inform the UE about a service provider providing the connection for the UE, e.g. about a charge for using the (second) connection.

In an example, the method may further comprise receiving transmission resource from the network entity and assigning at least a portion of the received transmission resource to the user equipment. Thus, the user equipment can be enabled by the RS to use the network entity for transmission purposes.

In an example, the method may further comprise establishing a third connection between further user equipment and the relay system and assigning another portion of the received transmission resource to the further user equipment. Thus, the RS can split the transmission resource in dependence of different user requirements.

In an example, the method may further comprise multiplexing data received via the first connection and the third connection for transmitting to the network entity via the second connection. Thus, transmission efforts may be reduced due to multiplexing data.

Examples relates to a method for user equipment comprising providing information about a mobile service provider of the user equipment. Further, the method comprises establishing a connection between the user equipment and a relay system. Thus, the UE can inform the RS in an easy way about, e.g. a desired mobile service provider.

In an example, the method may further comprise establishing a connection between the user equipment and the mobile relay system when the user equipment measures the highest signal strength of all signals received by the user equipment for the mobile relay system. This allows the user equipment to automatically connect to the network that has the strongest network reception.

Examples relate to a method comprising receiving information about a mobile service provider of user equipment. Further, the method comprises transmitting the information to a relay system enabling the relay system to establish a first connection between the relay system and the user equipment by pretending to be the same mobile service provider as the mobile service provider of the user equipment. Further, the RS is enabled to establish a second connection between the relay system and a network entity using a mobile service provider identical to or other than the mobile service provider of the user equipment. Thus, for the UE a network entity can be chosen by the RS, which may improve a user experience, e.g. by an improved QoS.

Examples further provide an apparatus, comprising one or more interfaces configured to communicate with a wireless base station, user equipment and/or relay system. The apparatus further comprises processing circuitry configured to control the one or more interfaces and to perform the method for a mobile relay system described above.

Examples further provide a vehicle comprising the apparatus as described.

Examples further relate to a computer program having a program code for performing the method described above, when the computer program is executed on a computer, a processor, or a programmable hardware component.

Some examples of apparatuses and/or methods will be described in the following by way of example only, and with reference to the accompanying figures, in which
Fig. 1 shows an example of a method for a mobile relay system;
Fig. 2 shows an example of a method for user equipment;
Fig. 3 shows an example of a method for an application server;
Fig. 4 shows a block diagram of an apparatus; and
Fig. 5 shows a schematic view of a vehicle.

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

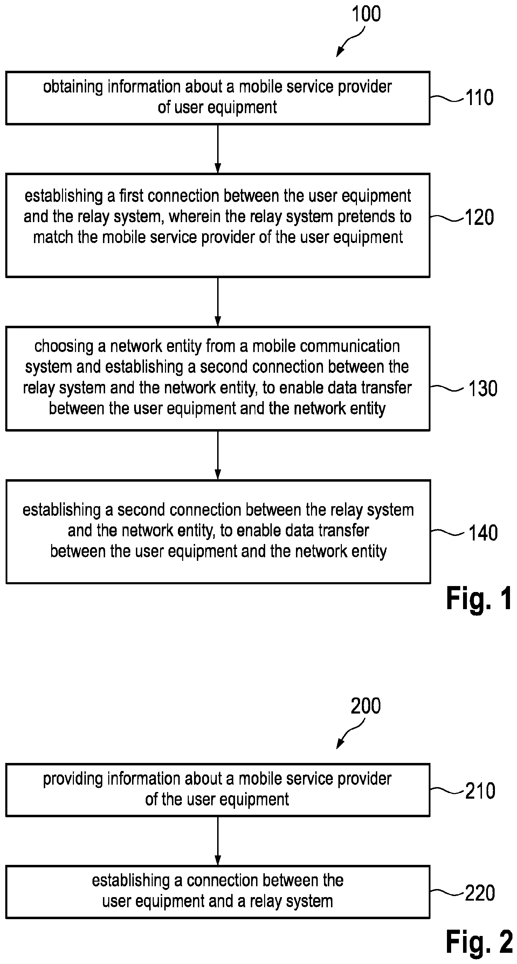

Fig. 1 shows an example of a method 100 for a mobile relay system. The method comprises obtaining 110 information about a mobile service provider of user equipment. Further, the method comprises establishing 120 a first connection between the user equipment and the relay system, wherein the relay system pretends to match the mobile service provider of the user equipment. The method also comprises choosing 130 a network entity from a mobile communication system and establishing a second connection between the relay system and the network entity, to enable data transfer between the user equipment and the network entity. By obtaining information about a provider of the UE the RS can be enabled to choose a network entity based on the provider of the UE. For example, the RS may only establish a second connection with the same provider as that of the UE.

The RS may communicate in a wireless communication network with a network entity of the mobile communication network, e.g. a base station. The mobile communication system may comprise a plurality of transmission points and/or base stations operable to communicate radio signals with a UE and/or RS, such as the RS. In an example, the mobile communication system may comprise the RS and the UE.

A base station can be located in the fixed or stationary part of the network or system. A base station may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station can be a wireless interface of a wired network, which enables transmission and reception of radio signals to a UE, such as a UE of a user, or a RS. Such a radio signal may comply with radio signals as, for example, standardized by 3GPP or, generally, in line with one or more of the above listed systems. Thus, a base station may correspond to a NodeB, an eNodeB, a BTS, an access point, etc. A RS may correspond to an intermediate network node in the communication path between a base station and a UE. A RS may forward a signal received from a UE to a base station, signals received from the base station to the mobile station transceiver, respectively.

In some examples, the RS may also act as a small cell base station, e.g., as a pico cell or femto cell base station. In some examples, the RS may act as signal relay between the UE and a base station. In some examples, the RS may support simultaneous connections to multiple base stations (of the same or different providers) and/or simultaneous connections to the same base station over multiple radio access technologies (e.g. a mmWave-based and a sub-6 GHz-based connection at the same). In particular, the RS may be associated with, and thus suitable for or configured to connecting/connect to, two or more wireless base stations of two or more providers. Additionally or alternatively, the RS may be associated with, and thus suitable for or configured to connecting/connect to, one or more base stations using two or more (different) radio access technologies. In some examples, the RS may act as a (internet protocol-based) gateway, suitable for data communication via two or more providers and/or two or more radio access technologies.

The mobile communication system may be cellular. The term cell refers to a coverage area of radio services provided by a transmission point, a remote unit, a remote head, a remote radio head, a base station, RS or a NodeB, an eNodeB, respectively. The terms cell and base station may be used synonymously. In some examples a cell may correspond to a sector. For example, sectors can be achieved using sector antennas, which provide a characteristic for covering an angular section around a base station or remote unit. In some examples, a base station or remote unit may, for example, operate three or six cells covering sectors of 120° (in case of three cells), 60° (in case of six cells) respectively. Likewise a RS, such as the RS, may establish one or more cells in its coverage area. A UE can be registered or associated with at least one cell, i.e. it can be associated to a cell such that data can be exchanged between the network and the mobile in the coverage area of the associated cell using a dedicated channel, connection or connection. A UE may hence register or be associated with a RS, such as the RS, or base station directly or indirectly, where an indirect registration or association may be through one or more RS.

Various examples of the RS may improve the cellular coverage in a vehicle. The RS may be used in order to connect multiple terminals (e.g. multiple terminals) inside of the vehicle and provide an aggregated connection to a stationary cellular communication system, for example, over one or more external vehicle antennas. In the following the connection between a stationary base station and an external antenna of a vehicle relay node may be denoted as relay or backhaul connection (the second connection); the connection between a relay node and end UE will be denoted as access connection (the first connection).

Such a RS may, for example, correspond to a relay as defined in 3GPP Release 10 and following, e.g., a moving relay or mobile relay as introduced in connection with 3GPP Release 12 and following, a wireless repeater (analog or digital), or a femto cell with a wireless backhaul connection. In case of a femto cell, the wireless backhaul connection could be provided over a separate cellular communication terminal, e.g., a 2G/3G/4G/5G modem. It is another finding that for the relay connection and for the access connection, respectively, the same or different frequency and spectrum resources can be used.

The RS may be to collect transmitted/received signals from/for all passengers of the vehicle and may manage the access of this data with the network entity. The RS may comprise at least, an internal antenna front-end (Ai) and at least an external antenna front-end (Ae). The RS might also be equipped with a cellular modem implementing the required mobile communication standards.

For example, the RS can be a standalone system, detached from the vehicle's own connectivity systems, or it may share some of its hardware components. The cellular modem required for the RS might not be shared with the vehicle's own cellular modem to separate UE's data processing with that required by LTE/NR-V2X-based safety applications, which might share some spectrum options. For example, the external antenna system required for the RS may be shared with those used for V2X or the vehicle's mobile connectivity systems.

For example, the internal antenna system (Aint) may be a linear or planar antenna array. The Aint may use multi-antenna techniques (such as beamforming) to focus directive specifically shaped beams towards each of the UEs or seats, reducing the requirements of transmitted power for both UE and RS (which will also experience very small Free Space Path Loss (FSPL)). The Aint may implement several antenna ports to perform multi-input and multi-output (MIMO) to increase capacity, or Multi User-MIMO to allow simultaneous data streams for two or more UEs. The external antenna system (Aext) may be a single or multi-panel topology, where each panel may embed several antenna elements in the form of linear or planar antenna array.

For example, the RS may be able to process a protocol layer of the received signals to identify the sender/receiver and successfully deliver data. The relaying process might only use the lower layers of a protocol stack to reduce the delay. The RS may be able to request a time-frequency resource (TFRS) set to the base station per UE or per RS basis. The RS may use different bands for internal (e.g. the first connection) and external links (e.g. the second connection). The low FSPL and mobility inside the cabin can be leveraged for mmWave band use, sparking dense channel re-use among vehicles. The RS may be able to perform initial access and beam management procedures with both the network entity and the UE. The RS may have scheduling capabilities with the UTs in either time or frequency division.

In general, a UE is a device that is capable of communicating wirelessly. In particular, however, the UE may be a mobile UE, i.e., a UE that is suitable for being carried around by a user. For example, the UE may be a User Terminal (UT) or User Equipment (UE) within the meaning of the respective communication standards being used for mobile communication. For example, the UE may be a mobile phone, such as a smartphone, or another type of mobile communication device, such as a smartwatch, a laptop computer, a tablet computer, or autonomous augmented-reality glasses. For example, the UE and the RS may be configured to communicate in a cellular mobile communication system. Accordingly the UE and the RS may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the UE and the RS may be configured to communicate in a mobile communication system / cellular mobile communication system. In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In addition, the UE, e.g. may be suitable for, or configured to, communicating/communicate via non-cellular communication systems, e.g. via a device-to-device vehicular communication system, e.g., according to the IEEE 802.11p standard (Institute of Electrical and Electronics Engineers standard 802.11p for vehicular communication) or via a wireless local area network (e.g., according to IEEE802.11a, IEEE 802.11b, IEEE 802.11g, IEEE802.11n, IEEE 802.11ac or IEEE 802.11ax, also known as Wi-Fi 1 through Wi-Fi 6(E)). In particular, the UE and the RS may be suitable for, or configured to, communicating/communicate in the frequency band between 5 GHz and 7.1 GHz, which covers communication in the 5 GHz band (for WiFi in the 5 GHz band), 5.9 GHz band (for vehicular communication according to the 802.11p standard) and between 5.9 GHz and 7.1 GHz (for WiFi in the 6 GHz band).

As is evident from the above example, while the communication between UE and RS and between UE and base station primarily occurs via the mobile communication system, additional communication between the RS and the UE, or at least from the RS to the UE, may occur via a vehicular communication system. Such communication may be carried out directly, e.g. by means of Device-to-Device (D2D) communication. Such communication may be carried out using the specifications of the vehicular communication system. An example of D2D is direct communication between vehicles, also referred to as Vehicle-to-Vehicle communication (V2V) or Vehicle-to-Everything (V2X), car-to-car, Dedicated Short Range Communication (DSRC), respectively. Technologies enabling such D2D-communication include 802.11p, 3GPP systems (4G, 5G, NR and beyond), etc.

Obtaining 110 the information about the provider of the UE can be done in advance, e.g. during a booking process. For example, a user of the RS may perform a booking process to book a service associated to the RS, e.g. renting a vehicle or purchasing a bus ticket for public transport, where the vehicle/bus comprises a RS. Thus, the information about the provider of the UE can be obtained during the booking process. For example, the booking process can be performed using the UE and the information about the provider of the UE can be determined during the booking process. The booking process can be performed using the RS, resulting in an immediate availability of the information about the provider of the UE for the RS. For example, the RS may comprise or may be connected with a user terminal, e.g. a user device in an interior of a vehicle (e.g. an infotainment screen). Thus, by performing a booking process using the user terminal (e.g. extending a car rental period) the information about the provider of the UE can be determined by the RS. Alternatively or additionally, the booking process can be performed using an external device, e.g. an application server. Thus, the information about the provider of the UE can be determined by the external device and can be transmitted to the RS.

Further, the information about the provider of the UE may be obtained using a connection between the UE and the RS as described herein. For example, the information about the provider of the UE may be provided upon request of the RS or may be broadcast periodically via a broadcast channel of the UE or via a vehicular communication system if the RS is integrated into a vehicle (e.g., as part of a CAM). For example, information about the provider of the UE can be obtained during a pairing process of the UE with the RS. For example, the information about the provider of the UE may be transmitted by the UE with a request for establishing a connection.

Establishing 120 a first connection between the user equipment and the relay system, wherein the relay system pretends to match the mobile service provider of the user equipment can be initiated by a pairing process. The first connection can be a wireless connection between the UE and the RS e.g. a mmWave-based connection over a mobile communication system (e.g., using carrier frequencies of at least 20 GHz) or may be performed at lower carrier frequencies, e.g. using carrier frequencies of at most 7.5 GHz. For example, the wireless connection between the UE and the RS may be initiated using protocols of the mobile communication system, or using a short-range communication system, such as via a wireless local area network outlined above.

The first connection can be established independently of a provider of the UE (and a provider of the RS), as the RS pretends to match the provider of the UE. Thus, the first connection can be established whenever the UE request it (and has access to the RS). For example, an owner of the RS may provide the user with unlimited access to the mobile communication network, e.g. as a part of service during a cab ride. This way the user can use the mobile communication network anytime, e.g. using a base station providing a satisfactory QoS.

Choosing 130 a network entity from a mobile communication system may comprise choosing a network entity of a plurality of network entities. For example the RS can use the resources of multiple wireless backhaul connections. For example, the RS may be associated with two or more wireless base stations associated to two or more providers and/or two or more RATs. In this case, it is likely that a QoS available via the RS exceeds a QoS available solely with the UE.

The mobile communication system may comprise a large number of different providers of different network entities. However, the RS might be limited to a limited number of providers, e.g. an operator of a network entity or a company renting and reselling resources of a network entity. For example, the limitation can be based on the same operator as the one of the UE.

In general, RSs may be hosted by vehicles (or by vehicular infrastructure, such as traffic lights, waiting houses at a bus stop). Vehicles, in turn, communicate via vehicular communication protocols, e.g., using vehicle-to-vehicle (V2V) or vehicle-to-everything (V2X) communication. Such vehicular communication protocols have recently evolved to use frequency bands and communication protocols that are similar to the frequency bands and communication protocols being used by UEs. For example, the 5.9 GHz band being used by IEEE (Institute of Electrical and Electronics Engineers) standard 802.11p is also used in WiFi 6E (according to IEEE standard 802.1 1ax). Furthermore, mobile communication systems of the 3GPP are being extended for use as vehicular communication systems, e.g., using Device-to-Device (D2D) functionality included in the 4G and 5G 3GPP standards. Therefore, information being broadcast by the RS may be received via a vehicular communication protocol by the UE, e.g., as part of a Conditional Awareness Message (CAM). For example, the information on the on one or more providers associated with the RS may be received via a vehicular communication system.

Establishing 140 a second connection between the relay system and the network entity, to enable data transfer between the user equipment and the network entity can be based on a mmWave-based connection (as described above). For example, the RS can be connected with a base station. The second connection can be a wireless connection between the UE and the RS e.g. a mmWave-based connection over a mobile communication system (e.g., using carrier frequencies of at least 20 GHz) or may be performed at lower carrier frequencies, e.g. using carrier frequencies of at most 7.5 GHz. For example, the wireless connection between the UE and the RS may be initiated using protocols of the mobile communication system, or using a short-range communication system, such as via a wireless local area network outlined above.

A factor for establishing the second (wireless) connection can be the provider of the UE. In case the RS is not associated with the same provider as the one of the UE, the second connection might not be established, as the UE might only use the wireless backhaul connections provided by the provider of the UE. For example, the second wireless connection might (only) be established if the RS is associated with same provider as the one of the UE. To avoid such futile connections, the RS may inform the UE before the second connection is established about the different provider.

Alternatively, the second connection can be established independently of different providers of the UE and the RS. For example, the owner of the RS may pay additional charges, which may incur for the UE due to usage of a different provider via the RS, as a part of service, e.g. during a cab ride.

Alternatively or optionally, e.g. for charging purposes, the RS may be limited to the same or a predefined other provider as the one of UE, e.g. a mobile network operator of the UE. For example, the act of establishing the first wireless connection may comprise transmitting a request to the RS. The request may comprise information on a mobile network operator associated with the UE. The method may comprise establishing a connection to the mobile communication system of the mobile network operator via the RS. In this case, the connection established via the RS may be limited to communication being performed over wireless backhaul connections being operated by the same or predefined provider. However, the RS might still be connected to multiple base stations of the mobile network operator, e.g., via different radio access technologies, thereby establishing the connection to the mobile communication system of the provider via multiple wireless backhaul connections.

In an example, the choosing of the network entity may depend on a mobile service provider and/or a radio access technology of the network entity. For example, as described above the RS may be limited to establish the second connection only with the same provider as the one of the UE. This way additional charges for using the mobile communication system can be avoided.

Alternatively, the RS may establish the second connection with a different provider as the one of the UE. In an example, the mobile service provider of the network entity may be different from the mobile service provider of the user equipment. For example, the owner of the vehicle, where the vehicle comprises a RS, may offer access to the RS for each passenger. The passenger may be in region without network coverage of his on provider, e.g. in a country that is not his home country, where the provider has no offer (e.g. during a bus trip with country change or a cab ride in a foreign country). This way e.g. roaming charges may be reduced/avoided for the passenger of the vehicle, since the owner e.g. may have a plan with a provider of this country.

Further, using a different provider enables the RS to choose e.g. a base station of a provider with a satisfactory QoS, a satisfactory signal strength, a lowest charge etc. Thus, a user experience may be improved due to a higher performance of the second connection and/or reduced costs. In an example, the choosing of the network entity may depend on a predictive QoS of the network entity. Thus, the RS may choose a network entity, which may provide a satisfactory predictive QoS (e.g. the best available of the mobile communication network) for the UE.

In an example, a first frequency used for the first connection is different from a second frequency used for the second connection. Thus, the second connection can be established using a frequency which may be e.g. not supported by the UE, not utilized by other user in the mobile communication network etc. For example, the RS may be connected to two different UEs via two different first connection with two different frequencies. Thus, the RS can decide whether to establish a second connection for each UE or solely a second connection for both UE, such that at least on UE is connected to the network entity via a frequency other than the frequency of the first connection of this UE. This way needed traffic for connecting a plurality of UE via the RS to the network entity (e.g. a base station) can be reduced.

In an example, the method may further comprise transmitting information about the mobile service provider of the network entity to the user equipment. This way the RS can inform the UE about a provider used for the second connection. For example, the provider used for the second connection may be not free of charge for the UE user. Thus, the UE user can be informed about a possible charge (for using the second connection) and can decide whether to pay the charge or not. Further, the UE can transmit in response or in advance a defined list of providers, which can be used for the second connection to the RS, e.g. providers free of charge for the UE user. Thus, the RS can be limited to a predefined number of providers for establishing the second connection.

Optionally, the RS may transmit information about e.g. capacities, data rate, QoS or charges of possible second connections (e.g. using different base station for establishing the second connection) to the UE. This way the UE user may be informed about multiple options to establish a second connection with the network entity via the RS and may chose a second connection with satisfactory parameters.

Alternatively or optionally, the RS may track parameters of the second connection e.g. used download and upload rates. For example, the RS may track that a download rate for streaming is not sufficient for the UE. In this case, the RS may inform the UE about alternatives for the second connection (e.g. using another bases station as the one actually used for the second connection). For example, the UE may be connected to a first network entity (e.g. the provider is the same as that of the UE), offering a data rate not sufficient for the UE user. Thus, the UE user may decide based on the information provided by the RS to connect to another network entity, e.g. of another provider for additional charge, because e.g. the UE user may need the data rate to perform a business call or stream a movie.

In an example, the method may further comprise receiving transmission resource from the network entity and assigning at least a portion of the received transmission resource to the user equipment. The transmission resource may e.g. a TFRS, data rate, data capacity etc. Thus, the owner of the RS may decide about a transmission resource for each user of the RS. For example, a cab driver may assign by default no transmission resource or only a small amount like 10% of total transmission resource to a passenger and after receiving a payment for improved RS-service the cab driver may assign a greater portion to the passenger. For example, the UE user may be not satisfied with the download rate of his UE (either using his own UE provider or the RS) and may purchase from the cab driver another portion of the transmission resource of the RS.

In an example, the method may further comprise establishing a third connection between further user equipment and the relay system and assigning another portion of the received transmission resource to the further user equipment. For example, a bus may comprise the RS and the passengers of the bus may use the RS to connect with the network entity. Sine transmission resources may be limited, the RS may assign to every passenger of the bus an equal part of the transmission resource. Thus, each passenger of the bus may obtain the same performance using the RS. Alternatively, instead of sharing the transmission resource, the transmission resource may be separated into a fixed number of portions. A passenger of the bus may purchase as many portions of the transmission resource as desired and as available. Thus, the RS can assign a purchased portion of the transmission resource to a specific passenger.

In an example, the method may further comprise multiplexing data received via the first connection and the third connection for transmitting to the network entity via the second connection. As described above, the RS can use only one second connection to establish connections between multiple UEs and the network entity. Thus, by multiplexing the data traffic may be reduced, e.g. by avoiding establishing a further second connection.

More details and aspects are mentioned in connection with the embodiments described above and/or below. The example shown in Fig. 1 may comprise one or more optional additional features corresponding to one or more aspects mentioned in connection with the proposed concept or one or more examples described below (e.g. Fig. 2 - 5).

Fig. 2 shows an example of a method 200 for user equipment. The method 200 comprises providing 210 information about a mobile service provider of the user equipment. Further, the method 200 comprises establishing 220 a connection between the user equipment and a relay system. Thus, the RS can consider the provider of the UE that is connected to the network entity via the RS. The method 200 may be performed in connection with the method 100 describe with reference to Fig. 1. For example, the method 200 may be performed by a UE to connect the UE with the network entity via the RS as described with reference to Fig. 1 (e.g. the RS may simultaneously perform the method for the RS).

In an example, the method 200 may further comprise establishing a connection between the user equipment and the mobile relay system when the user equipment measures the highest signal strength of all signals received by the user equipment for the mobile relay system. The UE may transmit an authorization request message (ARM) if the signal strength of the RS is the highest signal strength of all signals for mobile communication purposes received by the UE. For example, the UE may be connected with a base station of a mobile communication network and a user of the UE may enter a vehicle, resulting in a decreased signal strength of the base station, because the signal may be partially blocked by the vehicle. Thus, the UE may terminate the connection to the base station and/or establish a connection to the RS of the vehicle to improve a performance of the mobile communication.

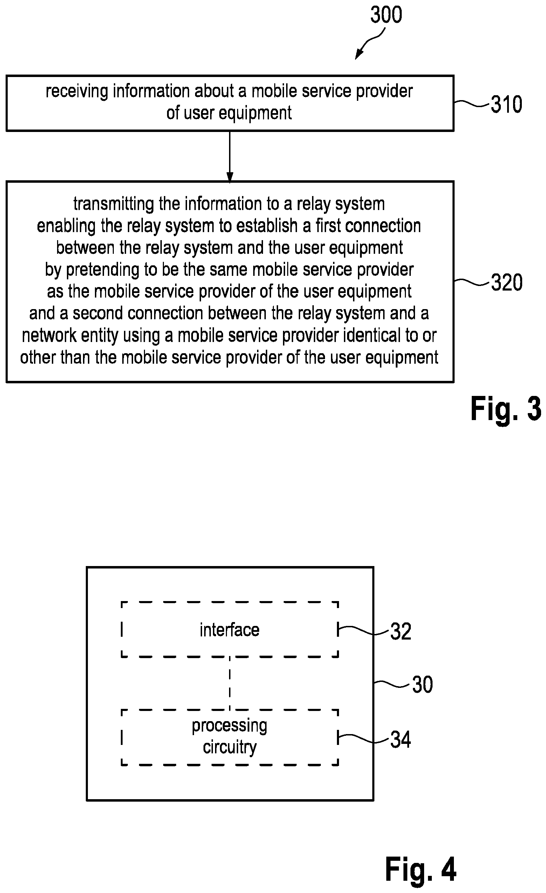

More details and aspects are mentioned in connection with the embodiments described above and/or below. The example shown in Fig. 2 may comprise one or more optional additional features corresponding to one or more aspects mentioned in connection with the proposed concept or one or more examples described above (Fig. 1) and/or below (e.g. Fig. 3 - 5).

Fig. 3 shows an example of a method 300 for an application server. The method 300 comprises receiving 310 information about a mobile service provider of user equipment. Further, the method 300 comprises transmitting 320 the information to a relay system enabling the relay system to establish a first connection between the relay system and the user equipment by pretending to be the same mobile service provider as the mobile service provider of the user equipment. Further, the RS is enabled to establish a second connection between the relay system and a network entity using a mobile service provider identical to or other than the mobile service provider of the user equipment.

The method described with reference to Fig. 1 may be accessible from an application layer, e.g. the application server. Thus, the method for the RS may be controlled by an operator (master user), e.g. an owner, a user, a driver or an authorized person. For example, the method may be controllable via backend instructions (e.g. fleet control, smartphone access), from the vehicle (e.g. such as from infotainment screens). In another example, the control of the method can be temporarily permitted for a third-party.

More details and aspects are mentioned in connection with the embodiments described above and/or below. The example shown in Fig. 3 may comprise one or more optional additional features corresponding to one or more aspects mentioned in connection with the proposed concept or one or more examples described above (Fig. 1-2) and/or below (e.g. Fig. 4-5).

Fig. 4 shows a block diagram of an apparatus 30. The apparatus 30 comprises one or more interfaces 32 configured to communicate with a wireless base station, user equipment and/or mobile relay system. The apparatus further comprises processing circuitry 34 configured to control the one or more interfaces and to perform the method for a mobile relay system described above (e.g. for the RS Fig.1, for the UE Fig. 2 or for the application server Fig.3).

For example, the apparatus 30 can be the RS, where the interface is configured to communicate with a wireless base station and user equipment. Alternatively, the apparatus 30 can be the UE, where the interface 32 is configured to communicate at least with the RS (and optionally with an application server). Alternatively, the apparatus 30 can be an application server, where the interface 32 is configured to communicate at least with the RS (and optionally with UE).

As shown in Fig. 4 the respective one or more interfaces 32 are coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface 32, so that any data transfer that occurs over the interface and/or any interaction in which the interface may be involved may be controlled by the processing circuitry 34.

In an embodiment the apparatus 30 may comprise a memory and at least one processing circuitry 34 operably coupled to the memory and configured to perform the below mentioned method.

In examples the one or more interfaces 32 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 32 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

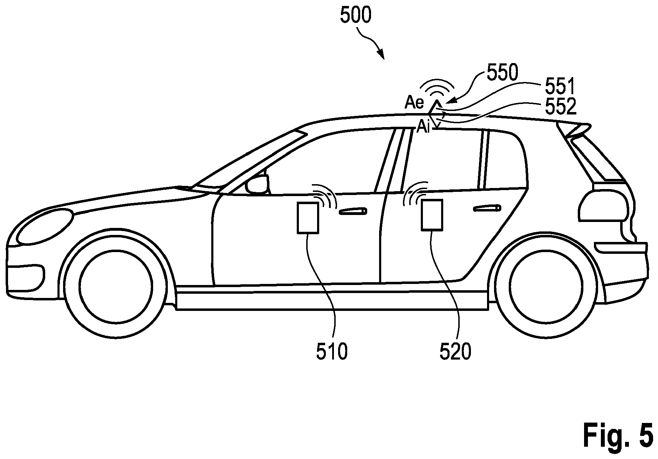

More details and aspects are mentioned in connection with the embodiments described above and/or below. The example shown in Fig. 4 may comprise one or more optional additional features corresponding to one or more aspects mentioned in connection with the proposed concept or one or more examples described above (Fig. 1-3) and/or below (e.g. Fig. 5).

Fig. 5 shows a schematic view of a vehicle 500. In an example, the vehicle 500 comprises the apparatus described with reference to Fig. 4. For example, the apparatus can be UE 510 of a user of the vehicle 500 (e.g. a driver or a passenger), an application server 530 (e.g. a control unit of the vehicle 500 connected to an input device of the vehicle 500) or a RS 550. The mRS may comprise an internal antenna 552 (Ai) and an external antenna 551 (Ae). Optionally, the vehicle 500 may comprise an input device, wherein the input device can be configured to control the method for a mobile relay system described above. For example, the input device can be the UE 510 or an infotainment screen (not shown) of the vehicle 500. The infotainment screen can be a part to the application server 530. For example, the input device can be the RS 550 (e.g. a RS 550 of a vehicle 500 parked in a parking garage, where the parking garage comprises a RS, so that the RS 550 of the vehicle 500 may act as input device for the RS of the parking garage).

The mRS 550 shown in Fig. 5 can be controlled by the vehicle 500 (e.g. by a control unit) and/or via an application server (e.g. a backend server via an application layer or a smartphone of a vehicle owner). For example, a mRS may be a mRS 550 being hosted by a vehicle. Alternatively, a mRS may be a mRS being hosted by a vehicular infrastructure, such as a traffic light.

As shown in Fig. 5 inside of the vehicle 500 may be two UE 510, 520. Both UEs 510, 520 may experience a large propagation lose. Thus the UEs 510, 520 cannot effectively communicate with a base station with a satisfying performance. The UE 510 may identify the RS 550 and requests access, e.g. transmitting an ARM. The RS 550 may grant access (e.g. using an access grant message) and may bridge the UE 510 connection with a network entity (not shown), e.g. a base station of the mobile communication network. The network entity may assign a TFRS to the RS 550. The RS 550 may assign at least a part of the TFRS, e.g. TF1, to the UE 510 without exceeding TFRS capacity.

Further, the UE 510 may communicate with an Aint, e.g. using multi-antenna techniques (such as 2x2 MIMO), the RS 550 interprets the data packets and relays to the network entity at the appropriate TFRS, e.g. using multi-antenna techniques (such as 4x4 MIMO).

Furthermore, the UE 520 may identify the RS 550 and request access, e.g. using an ARM. The RS may grant access (e.g. using an access grant message) and the RS 550 may assign a second TFRS, e.g. TF2, to the UE 520. Without exceeding the TF1 capacity, RS 550 might request larger capacity for TFRS, e.g. to cover request of further UE. The RS 550 may collect downlink data for UE 510 and UE 520 (now 'represented' by RS 550) in the appropriate TFRS. Further, the RS 550 ma relay downlink data for UE 510 and UE 520 using multi-antenna techniques (such as MU-MIMO or beamforming), transmitting simultaneous data streams or focused beams to each UE 510, 520.

The following description relates to the method as described above (e.g. Fig. 1 - 3), the corresponding apparatus (e.g. Fig. 4), and to a corresponding computer program. Features introduced in connection with the method may likewise be introduced into the corresponding apparatus.

For example, the vehicle 500 may be a land vehicle, such a road vehicle, a car, an automobile, an off-road vehicle, a motor vehicle, a bus, a robo-taxi, a van, a truck or a lorry. Alternatively, the vehicle 500 may be any other type of vehicle, such as a train, a subway train, a boat or a ship. For example, the proposed concept may be applied to public transportation (trains, bus) and future means of mobility (e.g., robo-taxis).

The RS 550 is a counterpart to the UE 510. The UE 510 decides on whether or when to connect to the RS 550 (e.g. based on received signal strength). Optionally, the RS 550 supports that determination with the information outlined above. To establish the connection, and to provide the above-mentioned information, the UE 510 and the RS 550 may communicate with each other. In this context, two types of communication may be distinguished - communication being performed before the connection establishment, and communication that occurs as part of, and after, the connection establishment.

The communication that occurs between the RS and the UE, and that may be used to provide pairing availability message, ARM, access grant message, access denial message etc., may be based on broadcasts of the RS 550, e.g., via the mobile communication system and/or the vehicular communication system introduced in connection with Fig. 4. Accordingly, the RS 550 and the UE 510, and in particular the at least one interface, may be suitable for, or configured to, communicate in/via the mobile communication system and/or the vehicular communication system. For example, the RS 550 and the UE 510, and in particular the at least one interface, may be configured to communicate via one or more antennas placed at the outside of the vehicle via the mobile communication system or via the vehicular communication system, e.g., with other communication devices outside the vehicle, such as base stations for the purpose of maintaining wireless backhaul connections. Additionally, the RS 550 and the UE 510, and in particular the at least one interface, may be configured to communicate via short-range communication, e.g., via a wireless local area network according to a variant of the IEEE 802.11 standard, via Bluetooth or via UWB.

In some examples, the RS 550 may merely act as signal relay between the UE 510 and a base station. For example, after the connection has been established, the RS 550 may repeat (and amplify) signals received from the UE 510, so they are transmitted to the base station, and repeat signals from the base station and destined for the UE 510 so they are transmitted to the UE 510. For example, such operation of the RS 550 may be largely provider independent, i.e., the provider may communicate directly with the UE 510, with the RS 550 acting as a (transparent) signal relay.

In some examples, the functionality of the RS 550 is more complex, however. For example, the RS 550 may act as a small-cell (e.g., pico-cell or femto-cell) base station towards the UE 510, or as a data gateway. In the former case, the RS 550 may operate one or more cells that provide cellular coverage for the UE 510 (and other UEs 520). In the latter case, merely an internet protocol (IP)-based connection may be established between the UE 510 and the RS 550. In both cases, the RS 550 may act as gateway for establishing a data connection for the UE 510. For example, the RS 550 may act as gateway for establishing a data connection for the UE 510 via two or more mobile network operators and/or two or more radio access technologies.

As is evident from the above examples, various examples of the present disclosure relate to multi-MNO relaying for mobile devices in low or out of coverage. The development of 5G has brought increased attention to the automotive industry as a vertical integration expected to leverage the most advanced features of the new generation of wireless communications. Even in the case of 5G the user may face low or out of coverage situations, depending on the used sim card, i.e. coverage provided by the MNO, it uses. Consequently, a mobile device, i.e. a UE 510, 520, might experience low or out of coverage.

The proposed concept may thus use vehicles (RS) or infrastructure elements (RS) (as powerful communication nodes) as outdoor (m)RS. The (m)RS may also be able to relay UE-base statin/base station-UT (from the UE to the base station and from the base station to the UE) by using only an external antenna system, e.g., for the sake of power efficiency at the UE side. Vehicles or infrastructure elements may have multiple sim cards (multi-MNO connectivity). A vehicle might have high a QoS (Quality of Service) with at least one MNO. In general, not only a vehicle may be suitable for hosting the RS, but also infrastructure, e.g. traffic lights etc.

More details and aspects are mentioned in connection with the embodiments described above. The example shown in Fig. 5 may comprise one or more optional additional features corresponding to one or more aspects mentioned in connection with the proposed concept or one or more examples described above (Fig. 1 - 4).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example.

## Claims

1. A method (100) performed by a mobile relay system, comprising
obtaining (110) information about a mobile service provider of a user equipment (510; 520)
establishing (120) a first connection between the user equipment (510; 520) and the mobile relay system independently of the mobile service provider of the user equipment and a provider of the mobile relay system, as the mobile relay system pretends to match the mobile service provider of the user equipment (510; 520);
choosing (130) a network entity from a mobile communication system; and
establishing (140) a second connection between the mobile relay system and the network entity, to enable data transfer between the user equipment (510; 520) and the network entity, wherein the choosing of the network entity depends on a predictive quality of service of the network entity.

2. The method (100) according to claim 1, wherein
the choosing of the network entity depends on a mobile service provider and/or a radio access technology of the network entity.

3. The method (100) according to claim 2, wherein
the mobile service provider of the network entity is different from the mobile service provider of the user equipment (510; 520).

4. The method (100) according to any of the preceding claims, wherein
a first frequency used for the first connection is different from a second frequency used for the second connection.

5. The method (100) according to any of the preceding claims, further comprising transmitting information about the mobile service provider of the network entity to the user equipment (510; 520).

6. The method (100) according to any of the preceding claims, further comprising receiving transmission resource from the network entity; and
assigning at least a portion of the received transmission resource to the user equipment (510; 520).

7. The method (100) according to claim 6, further comprising
establishing a third connection between further user equipment (510; 520) and the relay system; and
assigning another portion of the received transmission resource to the further user equipment (510; 520).

8. The method (100) according to claim 7, further comprising
multiplexing data received via the first connection and the third connection for transmitting to the network entity via the second connection.

9. An apparatus (550) of a mobile relay system, comprising one or more interfaces configured to communicate with a wireless base station and user equipment (510; 520); and processing circuitry configured to control the one or more interfaces and to: perform the method (100; 200; 300) according to any one of the preceding claims 1 to 8.

10. A vehicle (550) comprising the apparatus (510; 520; 550) according to claim 9.

11. A computer program having a program code for performing the method (100; 200; 300) according to any one of claims 1-8, when the computer program is executed on a computer, a processor, or a programmable hardware component of an apparatus of a mobile relay system according to claim 9.

## Patentansprüche

1. Verfahren (100), durchgeführt durch ein Mobilrelaissystem, umfassend Erlangen (110) von Informationen über einen Mobildienstanbieter einer Benutzerausrüstung (510; 520);
Herstellen (120) einer ersten Verbindung zwischen der Benutzerausrüstung (510; 520) und dem Mobilrelaissystem unabhängig von dem Mobildienstanbieter der Benutzerausrüstung und einem Anbieter des Mobilrelaissystems, während das Mobilrelaissystem vorgibt, dem Mobildienstanbieter der Benutzerausrüstung (510; 520) zu entsprechen;
Auswählen (130) einer Netzwerkentität aus einem Mobilkommunikationssystem; und
Herstellen (140) einer zweiten Verbindung zwischen dem Mobilrelaissystem und der Netzwerkentität, um Datentransfer zwischen der Benutzerausrüstung (510; 520) und der Netzwerkentität zu ermöglichen, wobei das Auswählen der Netzwerkentität von einer prädiktiven Dienstgüte der Netzwerkentität abhängig ist.

2. Verfahren (100) nach Anspruch 1, wobei
das Auswählen der Netzwerkentität von einem Mobildienstanbieter und/oder einer Funkzugangstechnologie der Netzwerkentität abhängig ist.

3. Verfahren (100) nach Anspruch 2, wobei
der Mobildienstanbieter der Netzwerkentität von dem Mobildienstanbieter der Benutzerausrüstung (510; 520) verschieden ist.

4. Verfahren (100) nach einem der vorhergehenden Ansprüche, wobei
eine für die erste Verbindung verwendete erste Frequenz von einer für die zweite Verbindung verwendeten zweiten Frequenz verschieden ist.

5. Verfahren (100) nach einem der vorhergehenden Ansprüche, ferner umfassend
Übertragen von Informationen über den Mobildienstanbieter der Netzwerkentität an die Benutzerausrüstung (510; 520).

6. Verfahren (100) nach einem der vorhergehenden Ansprüche, ferner umfassend
Empfangen eines Übertragungsbetriebsmittels von der Netzwerkentität; und
Zuweisen mindestens eines Teils des empfangenen Übertragungsbetriebsmittels der Benutzerausrüstung (510; 520).

7. Verfahren (100) nach Anspruch 6, ferner umfassend
Herstellen einer dritten Verbindung zwischen einer weiteren Benutzerausrüstung (510; 520) und dem Relaissystem; und
Zuweisen eines anderen Teils des empfangenen Übertragungsbetriebsmittels der weiteren Benutzerausrüstung (510; 520).

8. Verfahren (100) nach Anspruch 7, ferner umfassend
Multiplexen von über die erste Verbindung und die dritte Verbindung empfangenen Daten zum Übertragen an die Netzwerkentität über die zweite Verbindung.

9. Vorrichtung (550) eines Mobilrelaissystems, umfassend
eine oder mehrere Schnittstellen, konfiguriert zum Kommunizieren mit einer drahtlosen Basisstation und einer Benutzerausrüstung (510; 520); und
Verarbeitungsschaltungen, konfiguriert zum Steuern der einen oder mehreren Schnittstellen und zum:
Durchführen des Verfahrens (100; 200; 300) nach einem der vorhergehenden Ansprüche 1 bis 8.

10. Fahrzeug (550), umfassend die Vorrichtung (510; 520; 550) nach Anspruch 9.

11. Computerprogramm mit einem Programmcode zum Durchführen des Verfahrens (100; 200; 300) nach einem der Ansprüche 1-8, wenn das Computerprogramm in einem Computer, einem Prozessor oder einer programmierbaren Hardwarekomponente eines Mobilrelaissystems nach Anspruch 9 ausgeführt wird.

## Revendications

1. Procédé (100) réalisé par un système de relais mobile, comprenant
l'obtention (110) d'informations relatives à un fournisseur de services mobiles d'un équipement utilisateur (510 ; 520) ;
l'établissement (120) d'une première connexion entre l'équipement utilisateur (510 ; 520) et le système de relais mobile indépendamment du fournisseur de services mobiles de l'équipement utilisateur et d'un fournisseur du système de relais mobile, le système de relais mobile essayant d'égaler le fournisseur de services mobiles de l'équipement utilisateur (510 ; 520) ;
la sélection (130) d'une entité de réseau à partir d'un système de communication mobile ; et
l'établissement (140) d'une deuxième connexion entre le système de relais mobile et l'entité de réseau, afin de permettre un transfert de données entre l'équipement utilisateur (510; 520) et l'entité de réseau, dans lequel la sélection de l'entité de réseau dépend d'une qualité de service prédictive de l'entité de réseau.

2. Procédé (100) selon la revendication 1, dans lequel
la sélection de l'entité de réseau dépend d'un fournisseur de services mobiles et/ou d'une technologie d'accès radio de l'entité de réseau.

3. Procédé (100) selon la revendication 2, dans lequel le fournisseur de services mobiles de l'entité réseau est différent du fournisseur de services mobiles de l'équipement utilisateur (510 ; 520).

4. Procédé (100) selon l'une quelconque des revendications précédentes, dans lequel
une première fréquence utilisée pour la première connexion est différente d'une deuxième fréquence utilisée pour la deuxième connexion.

5. Procédé (100) selon l'une quelconque des revendications précédentes, comprenant en outre la transmission d'informations sur le fournisseur de services mobiles de l'entité de réseau à l'équipement utilisateur (510 ; 520).

6. Procédé (100) selon l'une quelconque des revendications précédentes, comprenant en outre la réception de ressources de transport en provenance de l'entité de réseau ; et
l'assignation d'au moins une partie de la ressource de transmission reçue à l'autre équipement utilisateur (510 ; 520).

7. Procédé (100) selon la revendication 6, comprenant en outre
l'établissement d'une troisième connexion entre d'autres équipements utilisateurs (510 ; 520) et le système de relais ; et
l'assignation d'une autre partie de la ressource de transmission reçue à l'autre équipement utilisateur (510 ; 520).

8. Procédé (100) selon la revendication 7, comprenant en outre le multiplexage de données reçues via la première connexion et la troisième connexion pour leur transmission à l'entité de réseau via la deuxième connexion.

9. Appareil (550) d'un système mobile, comprenant une ou plusieurs interfaces configurées pour communiquer avec une station de base sans fil et un équipement utilisateur (510 ; 520) ; et
des circuits de traitement configurés pour commander les une ou plusieurs interfaces et pour :
réaliser le procédé (100 ; 200 ; 300) selon l'une quelconque des revendications précédentes 1 à 8.

10. Véhicule (550) comprenant l'appareil (510 ; 520 ; 550) selon la revendication 9.

11. Programme d'ordinateur comprenant un code de programme pour réaliser le procédé (100 ; 200 ; 300) selon l'une quelconque des revendications 1 à 8, lorsque le programme d'ordinateur est exécuté sur un ordinateur, un processeur, ou un composant matériel programmable d'un appareil d'un système de relais mobile selon la revendication 9.
